# EUROPEAN PATENT SPECIFICATION

(11) **EP 1 026 396 B1**
(45) Date of publication and mention of the grant of the patent: **22.12.2004**
(21) Application number: 00200367.1
(22) Date of filing: 03.02.2000
(51) Int. Cl.: F02P 5/15, F02P 11/02

(54) **Ignition timing control system for an internal combustion engine**
Zündzeitpunktsteuersystem für Brennkraftmaschine
Circuit de commande de l'avance à l'allumage pour moteur à combustion interne

(30) Priority: 04.02.1999 JP 2750099
(43) Date of publication of application: 09.08.2000
(73) Proprietor: Mitsuba Corporation, Kiryu-shi, Gunma-ken (JP)
(72) Inventor: Tanaka, Kazuaki, Kiryu-shi, Gunma-ken (JP); Inaba, Mitsunori, Tochigi-ken (JP); Nozue, Yutaka, Gunma-Ken (JP)
(74) Representative: Schmitz, Jean-Marie

(56) References cited:
- DE-A- 4 103 107
- US-A- 4 887 215
- US-A- 5 826 205

## Description

### TECHNICAL FIELD

The present invention relates to an ignition timing control system for an internal combustion engine, and particularly to an ignition timing control system that utilizes a CPU for digitally controlling the ignition timing.

### BACKGROUND OF THE INVENTION

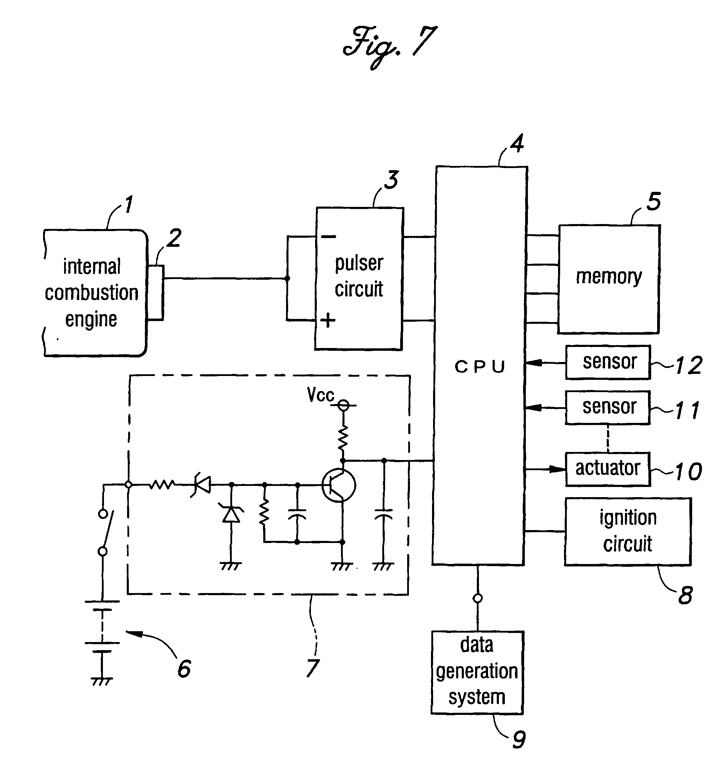

Conventionally, various types of ignition systems have been used for internal combustion engines. For example, there are those known as DC-CDI in which a DC-DC converter is used to raise the supply voltage so as to obtain a voltage required for a CDI-type ignition circuit. Such DC-CDI systems are used for example in motorcycles. Some of the DC-CDI systems utilize a CPU for conducting ignition timing control of the internal combustion engine. An exemplary circuit configuration of such a DC-CDI system utilizing a CPU in ignition timing control is shown in Figure 7. As shown, an internal combustion engine 1 is provided with a pulser coil 2 for sensing the rotation of a crank pulley for example, and the positive and negative pulser signals from the pulser coil 2 are shaped by a pulser circuit 3 and then supplied to a CPU 4 for conducting main control so that the shaped pulse signals can be used by the CPU 4 as a reference signal in determining the ignition timing. A rewritable non-volatile memory 5 such as an EEPROM is connected to the CPU 4 to store control values such as those indicating ignition timings. The CPU 4, when in a usual ignition control mode, uses the data in the memory 5 to supply an ignition circuit 8 with an ignition signal at an appropriate ignition timing. The CPU 4 may also be used in controlling an actuator 10 such as an exhaust valve opening control motor, a throttle valve opening control motor and a fuel pump. The operating state of the actuators 10 are monitored by the CPU 4 via appropriate sensors 11 (for example, angle sensors for the valve opening motor and a fuel pressure sensor for the fuel pump) so that the CPU 4 can properly control the actuators according to the sensor outputs. Other sensors 12 such as temperature sensors for sensing cooling-water temperature, oil temperature, intake air temperature and exhaust temperature or an oscillation sensor for detecting engine knock or a throttle valve opening sensor for detecting a degree of opening of the throttle valve may also be monitored by the CPU 4.

In motorcycles for example, the ignition timings used during the break-in period for the chain are sometimes changed after the break-in operation is completed. Further, it may be desired to store different control data such as the ignition timings and valve opening data into the memory 5 in order to achieve different engine characteristics (or in other words, control modes such as an economy mode or sport mode) depending on the type or use of the vehicles in which the internal combustion engine is used or in order to compensate variation in system component parts. Therefore, in the above shown DC-CDI system, when the memory 5 is initialized or when the data generated or edited by a data generation system 9 is written into the memory 5 through the CPU 4, it is necessary to bring the CPU 4 into a maintenance mode, which is a different mode from the usual ignition control mode, to thereby allow a program for the initialization or data writing to be executed. When checking operational integrity of a device such as the CDI circuit, actuator or sensor controlled or monitored by the CPU 4 also, it is required for the CPU 4 to be in the maintenance mode so that a program for the device check can be executed. Such checking of the device integrity may be required at the manufacturing factory, service stations or the like.

A battery voltage, for example, can be used as a digital input to the CPU 4 for instructing the CPU 4 to enter the maintenance mode. However, in order to prevent the CPU 4 from inadvertently entering the maintenance mode due to noise or static electricity, it is necessary to provide a protective circuit for protecting the CPU 4 from the noise or static electricity. Thus, in Figure 7, a circuit 7 is provided between the battery 6 and the CPU 4 as the protective circuit. As shown, the circuit 7 comprises many elements for protecting the CPU 4, leading to increase in the number of system component parts and thus to higher system cost.

In US-A-5 826 205 there is described an ignition timing control system according to the preamble of claim 1. More specifically, US-A-5 826 205 discloses an ignition timing control system for an internal combustion engine, comprising a CPU for conducting ignition timing control of the internal combustion engine, the CPU having a first operating mode for conducting the ignition timing control and a second operating mode for conducting a maintenance process; a pulse generator for generating a pulse signal as a function of a crank angle of the internal combustion engine; and a waveform shaping circuit for shaping the pulse signal to produce a shaped pulse signal that is input to the CPU so that the shaped pulse signal can be used by the CPU as a reference signal in determining the ignition timing.

In view of the above problems of the prior art, a primary object of the present invention is to provide a simplified ignition timing control system for an internal combustion engine including a CPU in which the operating mode of the CPU can be reliably selected without using a dedicated protective circuit for a digital input supplied to the CPU for the mode selection.

A second object of the present invention is to provide an ignition timing control system for an internal combustion engine including a CPU in which the operating mode of the CPU can be selected easily and reliably.

A third object of the present invention is to provide such an ignition timing control system in a simple and cost-effective manner.

To achieve this, the ignition timing control system of the invention is characterized by the features claimed in the characterizing part of claim 1. Basically, according to the present invention, these and other objects are accomplished in that, when the pulse width of the shaped pulse signal is equal to or smaller than a predetermined value, the CPU enters the first operating mode while when the pulse width of the shaped pulse signal is larger than the predetermined value, the CPU enters the second operating mode, wherein the ignition timing control system further comprises a long-pulse source for generating a pulse signal having a larger pulse width than the prescribed value.

Thus, since the CPU can determine which of the first operating mode (ignition control mode) or the second operating mode (maintenance mode) should be entered by evaluating the pulse width of the signal from the waveform shaping circuit (or pulser circuit), the dedicated digital input to the CPU for instructing the CPU which of the operating modes should be entered as well as the protective circuit therefor becomes unnecessary. This can reduce the number of component parts in the system and thus lower the manufacturing cost thereof.

Preferably, the system comprises means (13) for varying a pulse width of the shaped pulse signal (P2) from the waveform shaping circuit (3) between the pulse generator (2) and the waveform shaping circuit (3), and more preferably the means (13) for varying comprises: a long-pulse source (6, C1) for generating a pulse signal having a larger pulse width than the prescribed value (Td); and switch means (SW1, SW2) for connection and disconnection of the long-pulse source (6, C1) to and from the waveform shaping circuit (3). In this way, by operating the switch means, a personnel can easily select the operating mode of the CPU.

In one preferred embodiment of the invention, the long-pulse source (6) comprises a battery (6), and the switch means comprises a switch (SW1) having two input terminals connected to the pulse generator (2) and the battery (6), respectively, and an output terminal connected to the waveform shaping circuit (3) so that the pulse generator (2) or the battery (6) can be selectively connected to the waveform shaping circuit (3) depending on a state of the switch (SW1).

In another embodiment of the invention, the long-pulse source (C1) comprises a capacitor (C1) that is connected to the pulse generator (2) via a diode (D1), the diode having an anode connected to the pulse generator (2) and a cathode connected to the capacitor (C1), and the switch means comprises a switch (SW2) connected between the capacitor (C1) and the waveform shaping circuit (3).

In view of preventing inadvertent selection of the maintenance mode of the CPU, it will be preferable if the switch means comprises a switch (SW1, SW2) that normally disconnects the long-pulse source (6, C1) from the waveform shaping circuit (3) and only while operated manually, connects the long-pulse source (6, C1) to the waveform shaping circuit (3). Particularly, it will be preferable if the switch (SW1, SW2) is spring-biased so as to normally disconnects the long-pulse source (6, C1) from the waveform shaping circuit (3).

In yet another embodiment of the present invention, it may be possible to provide a terminal (14) between the pulse generator (2) and the waveform shaping circuit (3) so that a long-pulse source (6, C1) can be connected to the terminal (14). In this case, connection of a battery for example to the terminal between the pulse generator and the waveform shaping circuit can supply the CPU with a shaped signal pulse having a sufficiently large pulse width, and the battery is not limited to that used in the ignition timing control circuit but may be an external battery.

Preferably the ignition timing control system comprises a rewritable non-volatile memory (5) connected to the CPU (4) for storing data required in conducting ignition timing control, and the maintenance process comprises a process of writing data into the memory (5) and/or a process of initializing the memory (5).

If there is a device (such as actuators or sensors) controlled or monitored by the CPU, the maintenance process may comprise a process of checking operational integrity of such a device.

Other and further objects, features and advantages of the invention will appear more fully from the following description.

### BRIEF DESCRIPTION OF THE DRAWINGS

Now the present invention is described in the following with reference to the appended drawings, in which:
Figure 1 is a circuit diagram showing essential parts of one embodiment of an ignition timing control system according to the present invention;
Figure 2 shows another embodiment of an ignition timing control system according to the present invention;
Figure 3 shows yet another embodiment of an ignition timing control system according to the present invention;
Figure 4(a) is a diagram showing waveforms which are input to the pulser circuit and to the CPU, respectively, in a usual ignition control mode, while Figure 4(b) is a diagram in a maintenance mode corresponding to Figure 4(b);
Figure 5 is a control flowchart according to the present invention;
Figure 6 is a control flowchart of an exemplary maintenance mode process; and
Figure 7 is a circuit diagram showing essential parts of a conventional DC-CDI system for a motorcycle.

### DETAILED DESCRIPTION OF THE PREFERRED EMBODIMENTS

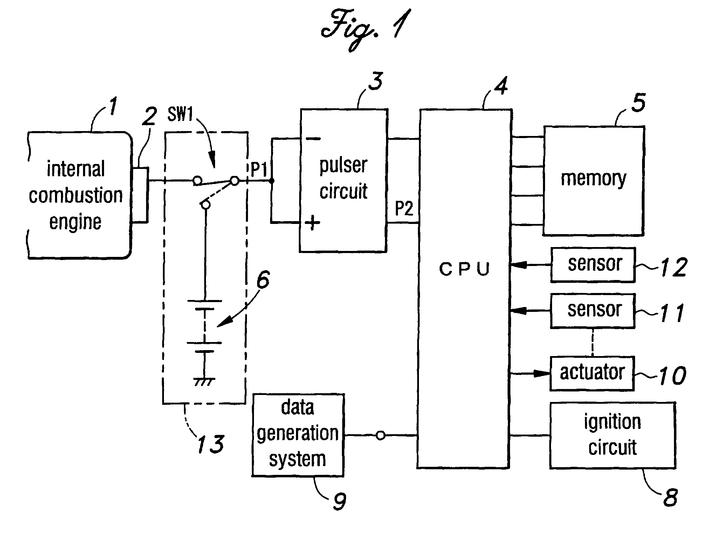

Figure 1 is a circuit diagram showing essential parts of a preferred embodiment of an ignition timing control system for an internal combustion engine according to the present invention, in which the parts similar to those in Figure 7 are denoted with the same reference numerals and detailed explanation thereof is omitted. In Figure 1 also, as in the conventional circuit, the pulser signals from the pulser coil 2 provided on the engine 1 side as a pulse generator for generating pulse signals in association with the crank angle of the engine 1 are shaped by the pulser circuit 3 serving as a waveform shaping circuit and then forwarded to the CPU 4, to which the rewritable non-volatile memory 5 is connected for storing control data such as ignition control values.

In the embodiment of the ignition timing control system shown in Figure 1, a mode selection switch SW1 is provided between the pulser coil 2 and the pulser circuit 3. As shown, the mode selection switch SW1 has two input terminals connected to the pulser coil 2 and the battery 6, respectively, and an output terminal connected to the pulser circuit 3 so that the pulser waveform from the pulser coil 2 or the voltage of the battery 6 is selectively transferred to the pulser circuit 3 depending on a state of the mode selection switch SW1.

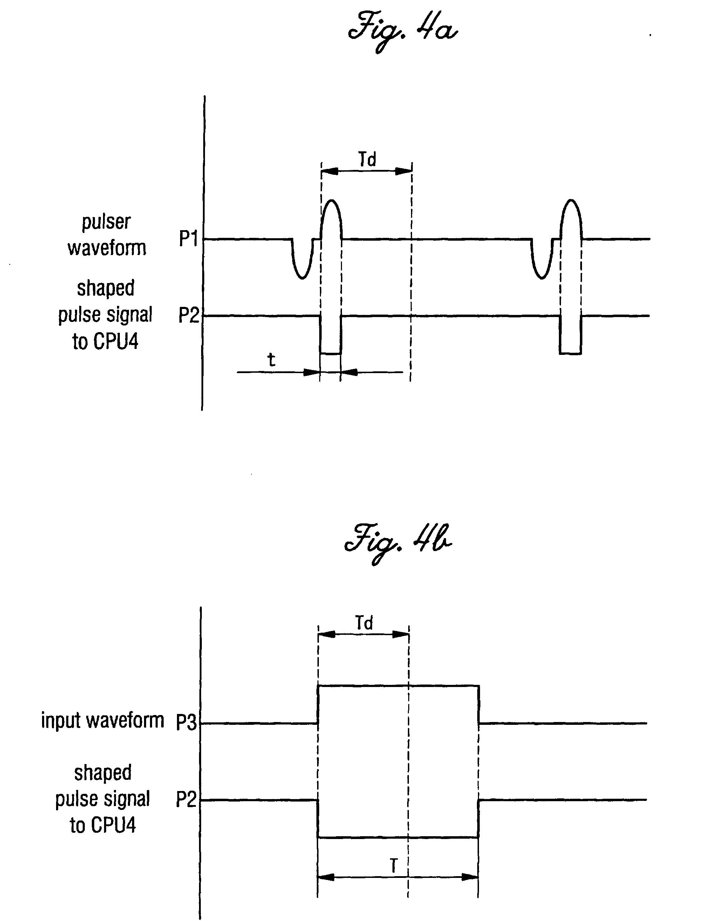

In the system constructed as above, when conducting usual ignition timing control, the mode selection switch SW1 is in a first state shown by the solid line in Figure 1 connecting the pulser coil 2 to the pulser circuit 3. In this state, a pulser waveform P1 such as shown by the upper waveform in Figure 4(a) is transferred to the pulser circuit 3 and is shaped into a rectangular wave P2 having substantially the same pulse width t as the positive pulser signal as shown by the lower waveform in Figure 4(a). The rectangular wave P2 is input to the CPU 4 as a shaped pulse signal.

When the mode selection switch SW1 is operated to be in a second state connecting the battery 6 to the pulser circuit 3 as shown by the phantom line in Figure 1 to bring the CPU 4 into the maintenance mode, for example after the break-in period for the chain of the motorcycle is over as mentioned in the explanation of the prior art, the voltage of the battery 6 is input to the pulser circuit 3 for the time period during which the switch SW1 is operated to be in the second state. Thus, as shown by the upper waveform in Figure 4(b), the resulting input waveform P3 to the pulser circuit 3 becomes a rectangular waveform having a relatively large pulse width T, and accordingly the shaped pulse signal P2 from the pulser circuit 3 also becomes a rectangular signal having the same relatively large pulse width T. Thus, in this embodiment, the battery 6 serves as a long-pulse source for generating a pulse signal having a longer pulse width than the pulse signal from the pulser coil 2, and the battery 6 and the switch SW1 constitute a circuit 13 for varying the pulse width of the shaped pulse signal P2 from the pulser circuit 3 to the CPU 4.

Thus, a threshold value Td that is larger than a usual pulse width t of the pulser waveform from the pulser coil 2 can be set so that when the pulse width of the shaped pulse signal P2 to the CPU 4 is smaller than the threshold value Td, the CPU 4 enters the usual ignition control mode and accordingly conducts the usual process for ignition timing control using the shaped pulse signal P2 as a reference in determining the ignition timing, while when the pulse width of the shaped pulse signal P2 to the CPU 4 is larger than the threshold value Td, the CPU 4 enters the maintenance mode for conducting the maintenance process such as transfer of the data from the data generation system 9 to the memory 5 or checking of the operational integrity of the device controlled or monitored by the CPU 4.

It should be noted that the CPU 4 may be in the maintenance mode only during the switch SW1 is operated to be in the second state (or only during the duration T of the pulse signal P3 to the pulser circuit 3) and brought back into the usual ignition control mode upon disconnection of the battery 6 from the pulser circuit 3. Or alternatively, it may be also possible that the CPU 4 remains in the maintenance mode after the disconnection of the battery 6 from the pulser circuit 3 until the CPU 4 detects a new pulse signal P2 having a pulse width shorter than the threshold value Td entering the CPU 4.

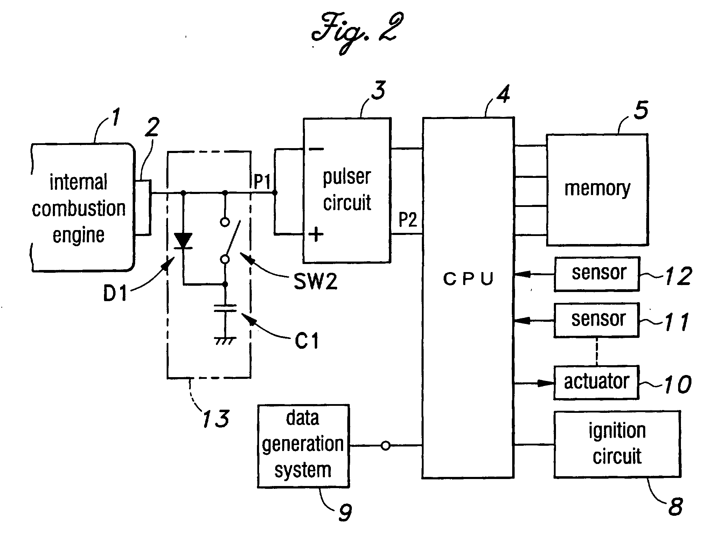

Figure 2 shows another embodiment of the ignition timing control system according to the present invention, in which the parts similar to those in Figure 1 are denoted with the same reference numerals and detailed explanation thereof is omitted. As shown, in this embodiment, a capacitor C1 is used as a long-pulse source instead of the battery 6. A diode D1 is provided between the capacitor C1 and the pulser coil 2 with an anode of the diode D1 being connected to the pulser coil 2 and a cathode of the same being connected to the capacitor C1 so as to allow the capacitor C1 to be charged. Further, a switch SW2 is provided between the capacitor C1 and the pulser circuit 3 so that the capacitor C1 is selectively connected to the pulser circuit 3. In this configuration also, when the capacitance of the capacitor C1 is appropriately selected, closing operation the switch SW2 can cause the capacitor C1 to supply the CPU 4 with a pulse signal having a larger pulse width than the prescribed value Td, thereby bringing the CPU 4 into the maintenance mode.

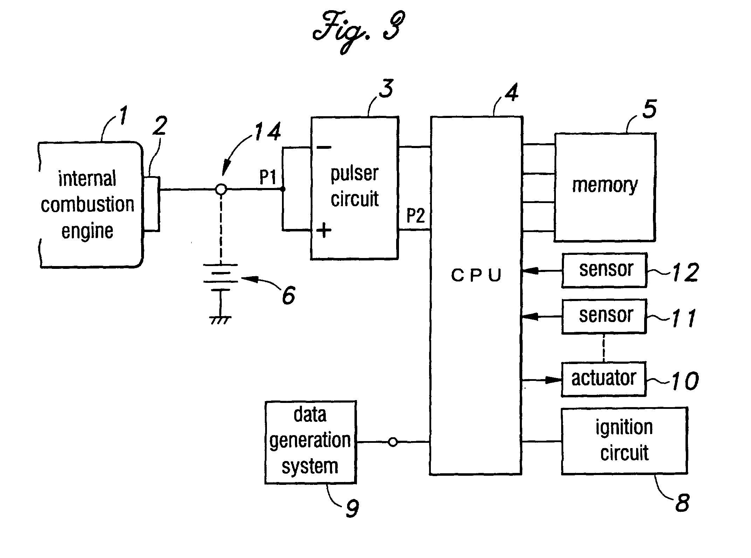

In the above two embodiments, in order to allow convenient selection of the operating mode of the CPU 4, the connection and disconnection of the battery 6 or the capacitor C1 as a long-pulse source to and from the pulser circuit 3 was achieved via the switch SW1 or SW2. However, as shown in Figure 3, it may be possible to omit the switch SW1 or SW2 and directly connect the long-pulse source such as the battery 6 to a terminal (or node) 14 between the pulser coil 2 and the pulser circuit 3 only when it is desired to bring the CPU 4 into the maintenance mode. When the battery 6 is connected to the terminal 14 between the pulser coil 2 and the pulser circuit 3, the voltage at the terminal 14 is substantially kept at the battery voltage irrespective of the pulse signal from the pulser coil 2. In such a case, the battery 6 is not limited to the one used in the ignition timing control system but may be an external battery.

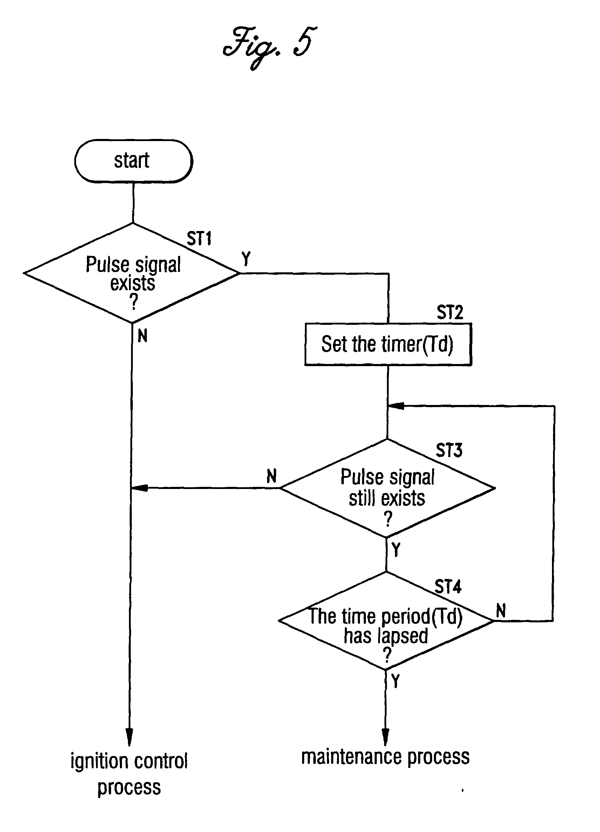

In the following, the above described way of control is explained with reference to the flowchart of Figure 5. In step ST1 of Figure 5, it is determined whether or not there is a shaped pulse signal P2 being input to the CPU 4. If there is no signal P2 being input to the CPU 4, the process proceeds to the usual process routine for ignition control and if it is determined that there is a pulse signal P2, the process proceeds to the second step ST2.

In step ST2, a timer is set for the threshold value Td, and in the next step ST3 it is determined if the pulse signal P2 still exists or not. If it is determined that the pulse signal P2 exists, the process proceeds to the fourth step ST4 in which it is determined if the time period corresponding to the threshold value Td has lapsed or not. If the time period has not yet lapsed, the process goes back to step ST3.

In the case where the pulser waveform P1 is input from the pulser coil 2 to the CPU 4 via the pulser circuit 3, the pulse signal P2 input to the CPU 4 disappears before the time period corresponding to the threshold value Td has lapsed, and therefore when it is determined in the third step ST3 that there is no pulse signal P2, the process enters the usual process routine.

If in step ST4 it is determined that the time period has lapsed, which means that the pulse signal P2 has been continuously input to the CPU 4 over the time period corresponding to the threshold value Td, it can be determined that the pulse signal P2 has resulted from the operation of the switch SW1, and accordingly the process enters the maintenance process routine.

The switch SW1 may consist of for example such a switch that causes the battery 6 to be connected to the pulser circuit 3 only while the switch is pushed manually and upon removal of the manual operation, is moved back by spring force to cause the pulser coil 2 to be connected to the pulser circuit 3. In this way, a normal manual operation of the switch SW1 will generate a pulse wave P3 having a sufficiently large pulse width than that of the pulser wave from the pulser coil 2, and the maintenance mode can be selected easily. Although a mechanical switch as described above is preferable, it may be possible to provide the switch SW1 as an electronic switch.

It should be noted that the pulser circuit 3 is usually designed so that it can receive a relatively high voltage waveform from the pulser coil 2 and thus can function as a protective circuit. The present invention utilizes such a circuit to allow the battery voltage to be input to the CPU 4 with protection against noise and/or static electricity and thus, although the present invention does not include an additional protective circuit such as the circuit 7 shown in Figure 7, the operating mode selection of the CPU 4 can be achieved reliably.

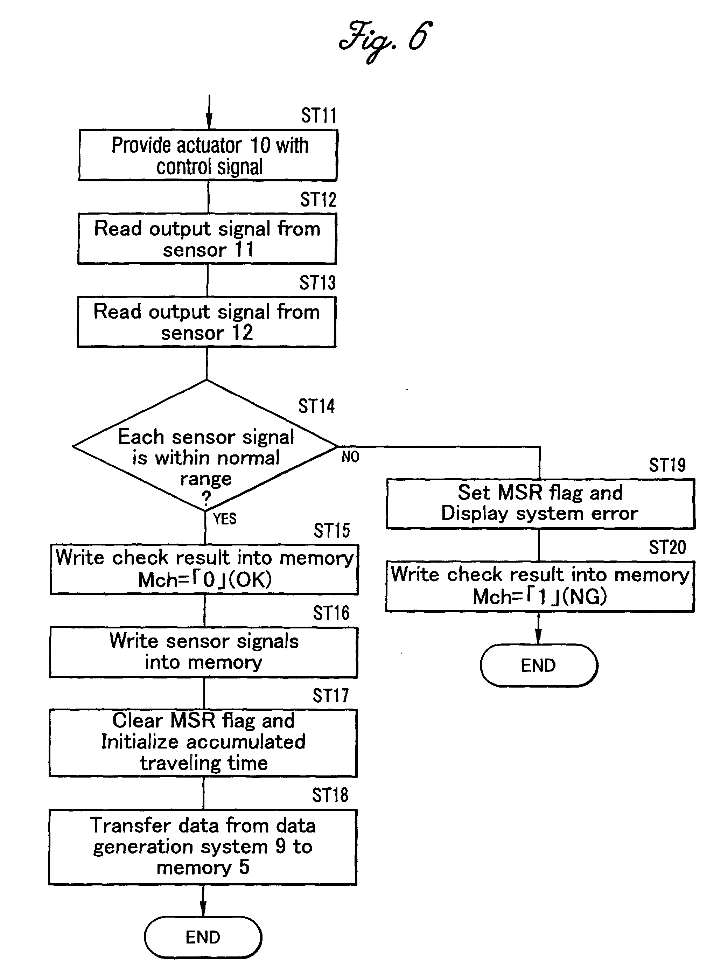

Referring to Figure 6, an example of the maintenance mode process is explained in the following

When it is determined in step ST4 that the time period corresponding to the threshold value Td has lapsed and the maintenance mode is selected, the process proceeds to step ST11 in the flowchart of Figure 6. In step ST11, the CPU 4 provides a certain control signal to the actuator 10 such as an exhaust valve opening control valve. Then in step ST12, the CPU 4 reads an output signal from the associated sensor 12 for indicating the operating state of the actuator 10. Further in step ST13, the CPU 4 reads an output from the sensor 12 such as temperature sensors and throttle valve opening sensor. In step ST14, it is determined if the signal values from the sensors acquired in steps ST12 and ST13 are within their respective normal ranges. If all the sensor signals are within the respective normal ranges, the process proceeds to step ST15 wherein for example zero (0) is input to a pre-selected variable (for example *Mch* ) to indicate that the result of the integrity test was "OK", and then in step ST16 the value of each sensor signal is written into a memory. Further in step ST17, a maintenance service requirement flag (MSR flag) that will be explained later is cleared and an accumulated traveling time since the previous execution of the maintenance process is initialized to zero. Then in step ST18, control data generated by the data generation system 9 is written into the rewritable non-volatile memory 5 and the maintenance process is ended.

When an abnormality is detected in any of the sensor signals in step ST14, the process proceeds to step ST19 where the MSR flag is set to notify that the abnormality has occurred and a maintenance service such as replacement or repair of a malfunctioning device is required. This can be achieved for example by turning on or flashing a diode under control of the CPU 4. It may be possible to flash different diodes depending on a device in which abnormality was detected. In step ST20, 1 (one) is input to the variable *Mch* to indicate that the device check result was "NG".

As shown above, in the maintenance mode the CPU 4 can conduct various processes that are different from the usual ignition control process that is conducted when the engine is rotating. It should be noted that in the above explained process, the number or type of actuators or sensors checked by the CPU 4 may be arbitrarily selected depending on the particular case.

Thus, according to the present invention, since the pulse width of a shaped pulse signal that is input from the pulser circuit to the CPU for conducting ignition control is used in determining which of the usual ignition control process or the maintenance process should be conducted, it is possible to use for example the battery voltage as a signal for bringing the CPU into the maintenance mode without providing a special protective circuit for protecting the CPU from noise and/or static electricity. This renders a lot of elements unnecessary, leading to fewer number of component parts and lower system cost.

The present invention has been described in terms of preferred embodiments thereof. These embodiments were shown for illustrative purposes and should not be recognized as restricting the present invention. It will be obvious to a person skilled in the art that various alterations and modifications are possible without departing from the scope of the present invention which is set forth in the claims. For example, although the present invention is preferably applicable to DC-CDI systems, the present invention can be also applied to other ignition control systems comprising a CPU. Further, though in the shown embodiments the shaped pulse signal P2 input to the CPU consisted of a negative pulse, a person skilled in the art will be able to use a positive pulse in changing the operating mode of the CPU according to the principle of the present invention.

## Claims

1. An ignition timing control system for an internal combustion engine (1), comprising:
a CPU (4) for conducting ignition timing control of the internal combustion engine (1), the CPU (4) having a first operating mode for conducting the ignition timing control and a second operating mode for conducting a maintenance process;
a pulse generator (2) for generating a pulse signal (P1)as a function of a crank angle of the internal combustion engine (1); and
a waveform shaping circuit (3) for shaping the pulse signal (P1) to produce a shaped pulse signal (P2) that is input to the CPU (4) so that the shaped pulse signal (P2) can be used by the CPU (4) as a reference signal in determining the ignition timing,
**characterized in that** when the pulse width of the shaped pulse signal (P2) is equal to or smaller than a predetermined value (Td), the CPU (4) enters the first operating mode while when the pulse width of the shaped pulse signal (P2) is larger than the predetermined value (Td), the CPU (4) enters the second operating mode, wherein the ignition timing control system further comprises a long-pulse source (6, C1) for generating a pulse signal having a larger pulse width than the prescribed value (Td).

2. An ignition timing control system according to claim 1,**characterized in** further comprising means (13) for varying a pulse width of the shaped pulse signal (P2) from the waveform shaping circuit (3) between the pulse generator (2) and the waveform shaping circuit (39, wherein the long-pulse source (6, C1) is included in the means (13) for varying a pulse width of the shaped pulse signal (P2).

3. An ignition timing control system according to Claim 2, **characterized in that** the means (13) for varying further comprises switch means (SW1, SW2) for connection and disconnection of the long-pulse source (6, C1) to and from the waveform shaping circuit (3).

4. An ignition timing control system according to claim 3, **characterized in that** the long-pulse source (6) comprises a battery (6), and
the switch means comprises a switch (SW1) having two input terminals connected to the pulse generator (2) and the battery (6), respectively, and an output terminal connected to the waveform shaping circuit (3) so that the pulse generator (2) or the battery (6) can be selectively connected to the waveform shaping circuit (3) depending on a state of the switch (SW1).

5. An ignition timing control system according to claim 3, **characterized in that**
the long-pulse source (C1) comprises a capacitor (C1) that is connected to the pulse generator (2) via a diode (D1), the diode having an anode connected to the pulse generator (2) and a cathode connected to the capacitor (C1), and
the switch means comprises a switch (SW2) connected between the capacitor (C1) and the waveform shaping circuit (3).

6. An ignition timing control system according to claim 3, **characterized in that** the switch means comprises a switch (SW1, SW2) that normally disconnects the long-pulse source (6, C1) from the waveform shaping circuit (3) and only while operated manually, connects the long-pulse source (6, C1) to the waveform shaping circuit (3).

7. An ignition timing control system according to claim 6, **characterized in that** the switch (SW1, SW2) is spring-biased so as to normally disconnects the long-pulse source (6, C1) from the waveform shaping circuit (39.

8. An ignition timing control system according to claim 1, **characterized in that** a terminal (14) is provided between the pulse generator (2) and the waveform shaping circuit (3) so that the long-pulse source (6, C1) can be connected to the terminal (14).

9. An ignition timing control system according to claim 1, **characterized in** further comprising a rewritable non-volatile memory (5) connected to the CPU (4) for storing data required in conducting ignition timing control, wherein the maintenance process comprises a process for writing data into the memory (5).

10. An ignition timing control system according to claim 1, **characterized in** further comprising a rewritable non-volatile memory (5) connected to the CPU (4) for storing data required in conducting ignition timing control, wherein the maintenance process comprises a process for initialising the memory (5).

11. An ignition timing control system according to claim 1, **characterized in that** the maintenance process comprises a process for checking operational integrity of a device (8, 10, 11, 12) controlled or monitored by the CPU (4).

## Patentansprüche

1. Zündzeitpunktsteuersystem für eine Brennkraftmaschine (1), umfassend:
eine CPU (4), um die Zündzeitpunktsteuerung der Brennkraftmaschine (1) durchzuführen, wobei die CPU (4) einen ersten Betriebsmodus aufweist, um die Zündzeitpunktsteuerung durchzuführen, und einen zweiten Betriebsmodus, um einen Wartungsvorgang durchzuführen;
einen Impulsgenerator (2), um ein Impulssignal (P1) in Abhängigkeit von einem Kurbelwinkel der Brennkraftmaschine (1) zu erzeugen; und
eine Wellenform-Formerschaltung (3) zum Formen des Impulssignals (P1), um ein geformtes Impulssignal (P2) zu erzeugen, das in die CPU (4) eingegeben wird, so daß das geformte Impulssignal (P2) von der CPU (4) als ein Bezugssignal bei der Bestimmung des Zündzeitpunkts verwendet werden kann,
**dadurch gekennzeichnet, daß** die CPU (4) in den ersten Betriebsmodus versetzt wird, wenn die Impulsbreite des geformten Impulssignals (P2) kleiner oder gleich einem vorgegebenen Wert (Td) ist, während die CPU (4) in den zweiten Betriebsmodus versetzt wird, wenn die Impulsbreite des geformten Impulssignals (P2) größer ist als der vorgegebene Wert (Td), wobei das Zündzeitpunktsteuersystem außerdem eine Langimpulsquelle (6, C1) umfaßt, um ein Impulssignal zu erzeugen, das eine größere Impulsbreite als der vorgegebene Wert (Td) aufweist.

2. Zündzeitpunktsteuersystem nach Anspruch 1, **dadurch gekennzeichnet, daß** es außerdem Mittel (13) umfaßt, um eine Impulsbreite des von der Wellenform-Formerschaltung (3) geformten Impulssignals (P2) zwischen dem Impulsgenerator (2) und der Wellenform-Formerschaltung (3) zu variieren, wobei die Langimpulsquelle (6, C1) in den Mitteln (13) zum Variieren einer Impulsbreite des geformten Impulssignals (P2) eingeschlossen ist.

3. Zündzeitpunktsteuersystem nach Anspruch 2, **dadurch gekennzeichnet, daß** die Mittel (13) zum Variieren außerdem ein Schaltmittel (SW1, SW2) umfassen, um die Langimpulsquelle (6, C1) mit der Wellenform-Formerschaltung (3) zu verbinden und davon zu trennen.

4. Zündzeitpunktsteuersystem nach Anspruch 3, **dadurch gekennzeichnet, daß** die Langimpulsquelle (6) eine Batterie (6) umfaßt, und
das Schaltmittel einen Schalter (SW1) umfaßt, der zwei Eingangsklemmen aufweist, die jeweils mit dem Impulsgenerator (2) und der Batterie (6) verbunden sind, und eine Ausgangsklemme, die mit der Wellenform-Formerschaltung (3) verbunden ist, so daß der Impulsgenerator (2) oder die Batterie (6) abhängig von einem Zustand des Schalters (SW1) auf selektive Weise mit der Wellenform-Formerschaltung (3) verbunden werden kann.

5. Zündzeitpunktsteuersystem nach Anspruch 3, **dadurch gekennzeichnet, daß**
die Langimpulsquelle (C1) einen Kondensator (C1) umfaßt, der über eine Diode (D1) mit dem Impulsgenerator (2) verbunden ist, wobei die Diode eine Anode aufweist, die mit dem Impulsgenerator (2) verbunden ist, und eine Kathode, die mit dem Kondensator (C1) verbunden ist, und
das Schaltmittel einen Schalter (SW2) umfaßt, der zwischen dem Kondensator (C1) und der Wellenform-Formerschaltung (3) verbunden ist.

6. Zündzeitpunktsteuersystem nach Anspruch 3, **dadurch gekennzeichnet, daß** das Schaltmittel einen Schalter (SW1, SW2) umfaßt, der die Langimpulsquelle (6, C1) normalerweise von der Wellenform-Formerschaltung (3) trennt, und die Langimpulsquelle (6, C1) nur dann mit der Wellenform-Formerschaltung (3) verbindet, wenn er manuell betätigt wird.

7. Zündzeitpunktsteuersystem nach Anspruch 6, **dadurch gekennzeichnet, daß** der Schalter (Sw1, SW2) durch eine Feder vorgespannt ist, um die Langimpulsquelle (6, C1) normalerweise von der Wellenform-Formerschaltung (3) zu trennen.

8. Zündzeitpunktsteuersystem nach Anspruch 1, **dadurch gekennzeichnet, daß** zwischen dem Impulsgenerator (2) und der Wellenform-Formerschaltung (3) eine Klemme (14) so vorgesehen ist, daß die Langimpulsquelle (6, C1) mit der Klemme (14) verbunden werden kann.

9. Zündzeitpunktsteuersystem nach Anspruch 1, **dadurch gekennzeichnet, daß** es ferner einen wiederbeschreibbaren nichtflüchtigen Speicher (5) umfaßt, der mit der CPU (4) verbunden ist, um Daten zu speichern, die zur Durchführung der Zündzeitpunktsteuerung benötigt werden, wobei der Wartungsvorgang einen Vorgang umfaßt, um Daten in den Speicher (5) zu schreiben.

10. Zündzeitpunktsteuersystem nach Anspruch 1, **dadurch gekennzeichnet, daß** es ferner einen wiederbeschreibbaren nichtflüchtigen Speicher (5) umfaßt, der mit der CPU (4) verbunden ist, um Daten zu speichern, die zur Durchführung der Zündzeitpunktsteuerung benötigt werden, wobei der Wartungsvorgang einen Vorgang umfaßt, um den Speicher (5) zu initialisieren.

11. Zündzeitpunktsteuersystem nach Anspruch 1, **dadurch gekennzeichnet, daß** der Wartungsvorgang ein Vorgang zur Kontrolle der Funktionstüchtigkeit eines Geräts (8, 10, 11, 12) ist, das von der CPU (4) gesteuert oder überwacht wird.

## Revendications

1. Système de commande du calage de l'allumage pour un moteur à combustion interne (1), comprenant :
une unité centrale (4) pour mettre en oeuvre la commande du calage de l'allumage du moteur à combustion interne (1), l'unité centrale (4) possédant un premier mode de travail pour mettre en oeuvre la commande du calage de l'allumage et un deuxième mode de travail pour mettre en oeuvre un processus de maintenance ;
un générateur d'impulsions (2) pour générer un signal à impulsions (P1) en fonction d'une position de vilebrequin du moteur à combustion interne (1) ; et
un circuit de façonnement de forme d'onde (3) pour façonner le signal à impulsions (P1) dans le but d'obtenir un signal à impulsions façonné (P2) qui est entré dans l'unité centrale (4), si bien que le signal à impulsions façonné (P2) peut être utilisé par l'unité centrale (4) comme signal de référence pour déterminer le calage de l'allumage ;
**caractérisé en ce que**, lorsque la largeur d'impulsion du signal à impulsions façonné (P2) est égale ou inférieure à une valeur prédéterminée (Td), l'unité centrale (4) entre le premier mode de travail dans lequel, lorsque la largeur d'impulsion du signal à impulsions façonné (P2) est supérieure à la valeur prédéterminée (Td), l'unité centrale (4) entre le deuxième mode de travail, le système de commande du calage de l'allumage comprenant en outre une source d'impulsions longues (6, C1) pour générer un signal à impulsions possédant une largeur d'impulsion supérieure à la valeur prescrite (Td).

2. Système de commande du calage de l'allumage selon revendication 1, **caractérisé en ce qu'**il comprend en outre un moyen (13) pour faire varier la largeur d'impulsion du signal à impulsions façonné (P2) à partir du circuit de façonnement de forme d'onde (3) entre le générateur d'impulsions (2) et le circuit de façonnement de forme d'onde (3), la source d'impulsions longues (6, C1) étant incluse dans le moyen (13) pour faire varier la largeur d'impulsion du signal à impulsions façonné (P2).

3. Système de commande du calage de l'allumage selon revendication 2, **caractérisé en ce que** le moyen (13) pour faire varier la largeur d'impulsion comprend en outre un moyen de commutation (SW1, SW2) pour la connexion et la déconnexion entre la source d'impulsions longues (6, C1) et le circuit de façonnement de forme d'onde (3).

4. Système de commande du calage de l'allumage selon revendication 3, **caractérisé en ce que** la source d'impulsions longues (6) comprend un accumulateur (6), et
le moyen de commutation comprend un commutateur (SW1) possédant deux bornes d'entrée connectées au générateur d'impulsions (2) et à l'accumulateur (6), respectivement, et une borne de sortie connectée au circuit de façonnement de forme d'onde (3), si bien que le générateur d'impulsions (2) ou l'accumulateur (6) peut être connecté de manière sélective au circuit de façonnement de forme d'onde (3) en fonction de l'état du commutateur (SW1).

5. Système de commande du calage de l'allumage selon revendication 3, **caractérisé en ce que**
la source d'impulsions longues (C1) comprend un condensateur (C1) qui est connecté au générateur d'impulsions (2) via une diode (D1), la diode possédant une anode connectée au générateur d'impulsions (2) et une cathode connectée au condensateur (C1) ; et
le moyen de commutation comprend un commutateur (SW2) connecté entre le condensateur (C1) et le circuit de façonnement de forme d'onde (3).

6. Système de commande du calage de l'allumage selon revendication 3, **caractérisé en ce que** le moyen de commutation comprend un commutateur (SW1, SW2) qui normalement déconnecte la source d'impulsions longues (6, C1) du circuit de façonnement de forme d'onde (3) et, uniquement lorsqu'il travaille de manière manuelle, connecte la source d'impulsions longues (6, C1) au circuit de façonnement de forme d'onde (3).

7. Système de commande du calage de l'allumage selon revendication 6, **caractérisé en ce que** le commutateur (SW1, SW2) est mis en état de précontrainte par ressort de façon à normalement déconnecter la source d'impulsions longues (6, C1) du circuit de façonnement de forme d'onde (3).

8. Système de commande du calage de l'allumage selon revendication 1, **caractérisé en ce qu'**on prévoit une borne (14) entre le générateur d'impulsions (2) et le circuit de façonnement de forme d'onde (3), si bien que la source d'impulsions longues (6, C1) peut être connectée à la borne (14).

9. Système de commande du calage de l'allumage selon revendication 1, **caractérisé en ce qu'**il comprend en outre une mémoire non volatile réinscriptible (5) connectée à l'unité centrale (4) pour stocker des données requises pour mettre en oeuvre la commande du calage de l'allumage, le processus de maintenance comprenant un processus pour écrire des données dans la mémoire (5).

10. Système de commande du calage de l'allumage selon revendication 1, **caractérisé en ce qu'**il comprend en outre une mémoire non volatile réinscriptible (5) connectée à l'unité centrale (4) pour stocker des données requises pour mettre en oeuvre la commande du calage de l'allumage, le processus de maintenance comprenant un processus pour initialiser la mémoire (5).

11. Système de commande du calage de l'allumage selon revendication 1, **caractérisé en ce que** le processus de maintenance comprend un processus pour vérifier l'intégrité opérationnelle d'un dispositif (8, 10, 11, 12) commandé ou surveillé par l'unité centrale (4).
